# EUROPÄISCHE PATENTANMELDUNG

(11) **EP 3 620 757 A1**
(43) Veröffentlichungstag der Anmeldung: **11.03.2020**
(21) Anmeldenummer: 18192490.3
(22) Anmeldetag: 04.09.2018
(51) Int. Cl.: G01F 23/296, G01F 23/284, G01F 23/292, G01F 23/14

(54) **FÜLLSTANDERMITTLUNGSVORRICHTUNG, SYSTEM UMFASSEND EINE FÜLLSTANDERMITTLUNGSVORRICHTUNG, VERFAHREN ZUR ERMITTLUNG EINES FÜLLSTANDES SOWIE VERWENDUNG DER FÜLLSTANDERMITTLUNGSVORRICHTUNG**

(71) Anmelder: Maibach VuL GmbH, 73037 Göppingen Voralb (DE)
(72) Erfinder: MAIBACH, Hans-Dieter, 73033 Göppingen (DE)
(74) Vertreter: Patentanwälte Behrmann Wagner PartG mbB

(57) **Zusammenfassung**

Es wird eine Füllstandermittlungsvorrichtung (20, 30, 40, 50) vorgeschlagen, umfassend ein Füllstandermittlungsmittel, ausgebildet zur Ermittlung eines Füllstandes eines Füllmaterials in einem Behälter und zum Senden einer Füllstandinformation, eine Verarbeitungseinheit (66), ausgebildet zur Verarbeitung zumindest der Füllstandinformation, sowie eine Informationsübermittlungseinheit, ausgebildet zur drahtlosen wahlweisen Übermittlung zumindest der Füllstandinformation an einen externen Empfänger (70).

## Beschreibung

Die Erfindung betrifft eine Füllstandermittlungsvorrichtung, ein System, umfassend eine Füllstandermittlungsvorrichtung, ein Verfahren zur Ermittlung eines Füllstandes sowie eine Verwendung der Füllstandermittlungsvorrichtung.

Aus der Praxis sind Behälter bekannt, welche mit einem Füllmaterial befüllbar sind. Dieses Füllmaterial ist gleichsam aus dem Behälter entnehmbar, sodass mit Befüllung und Entnahme ein schwankender Füllstand gegeben ist. Auch Streugutbehälter, welche zumeist an einem Fahrbahnrad angeordnet sind, können schwankende Füllstände aufweisen. Diese Streugutbehälter können beispielsweise mit Sand, mit Streusalz oder zumeist mit Split gefüllt sein. Da gerade bei intensiver Nutzung des Streugutbehälters, vornehmlich in der kalten Jahreszeit, eine schnelle Entleerung bis zu einer vollständigen Entleerung erfolgen kann, müssen Streugutbehälter von Personal regelmäßig vor Ort auf ihren Füllstand geprüft werden, um eine vollständige Entleerung durch rechtzeitiges Auffüllen zu vermeiden. Diese Überprüfung benötigt jedoch nicht nur eine erhebliche Menge Zeit, da in der kalten Jahreszeit beispielsweise in Ballungsräumen eine Vielzahl solcher Behälter aufgestellt und nachgefüllt werden müssen. Die für die Überprüfung und Nachfüllung zuständige Stelle hat zudem kein aktuelles Wissen um den aktuellen Füllstand, sodass ein Streugutbehälter tagelang oder gar wochenlang entleert sein kann, bis dies mittels einer Ortsbegehung durch Personal oder durch Hinweise von Anwohnern oder sonstigen Nutzern der zuständigen Stelle bekannt gemacht wird.

Der vorliegenden Erfindung liegt somit die Aufgabe zugrunde, eine Füllstandermittlungsvorrichtung sowie ein System vorzuschlagen, welche die Nachteile des Standes der Technik überwinden. Zudem soll ein Verfahren zur Ermittlung eines Füllstandes sowie die Verwendung der Füllstandermittlungsvorrichtung vorgeschlagen werden.

Hinsichtlich der Vorrichtung ist diese Aufgabe gelöst durch die Füllstandermittlungsvorrichtung mit den Merkmalen des Patentanspruchs 1. Es wird nämlich eine Füllstandermittlungsvorrichtung vorgeschlagen, umfassend ein Füllstandermittlungsmittel, ausgebildet zur Ermittlung eines Füllstandes eines Füllmaterials in einem Behälter und zum Senden einer Füllstandinformation, eine Verarbeitungseinheit, ausgebildet zur Verarbeitung zumindest der Füllstandinformation, sowie eine Informationsübermittlungseinheit, ausgebildet zur drahtlosen wahlweisen Übermittlung zumindest der Füllstandinformation an einen externen Empfänger.

Der Erfindung liegt nämlich der Gedanke zugrunde, eine Ortsbegehung jedes einzelnen Behälters durch eine Fernüberwachung zu ersetzen. Dadurch können nicht nur erhebliche Kostenreduktionen sondern auch ein viel geringerer Einsatz von Arbeitsleistung und sonstigen Ressourcen erzielt werden. Das Füllstandermittlungsmittel kann fest an dem Behälter positioniert sein, wobei es einen Füllstand ermittelt bzw. einen Messwert erzeugt und diesen an die Verarbeitungseinheit sendet. Die Verarbeitungseinheit ist zur Verarbeitung der Füllstandinformation ausgebildet und kann zudem das Verfahren zur Ermittlung des Füllstandes steuern. Nach Verarbeitung der Füllstandinformation kann die Informationsübermittelungseinheit diese Information drahtlos an einen externen Empfänger versenden.

Vermittels der erfindungsgemäßen Füllstandermittlungsvorrichtung ist nunmehr einer zuständigen Stelle der Füllstand eines Füllmaterials in einem Behälter jederzeit bekannt.

Gemäß einer bevorzugten Ausführungsform der Füllstandermittlungsvorrichtung nach der Erfindung umfasst das Füllstandermittlungsmittel eine Time-Of-Flight-Sensoreinheit, eine Ultraschall-Sensoreinheit, eine Radar-Sensoreinheit, eine Druck-Sensoreinheit und/oder eine Bewegungs-Sensoreinheit, insbesondere eine Beschleunigungssensor-Einheit und/oder eine Vibrationssensor-Einheit. Jede dieser Sensoreinheiten eignet sich für unterschiedliche Zwecke und weist unterschiedliche Vor- und Nachteile auf. Eine Time-Of-Flight-Sensoreinheit ist gegenüber einer Ultraschall- oder Radar-Sensoreinheit vergleichsweise preiswert. Die Time-Of-Flight-Sensoreinheit müsste, da sie eine Sichtverbindung zu dem Füllmaterial benötigt, in einem transparenten oder zumindest teiltransparenten Gehäuse der Füllstandermittlungsvorrichtung angeordnet sein.

Die Anordnung der Füllstandermittlungsvorrichtung mit einer Time-Of-Flight-Sensoreinheit sollte derart erfolgen, dass deren Sichtachse parallel zu einer Flächennormalen, der idealerweise horizontalen Oberfläche des Füllmaterials ausgerichtet ist. Bei einer Anordnung der Füllstandermittlungsvorrichtung mit einer Time-Of-Flight-Sensoreinheit (ToF-Sensoreinheit) an einem Deckel eines Behälters ist ein geöffneter Deckel erkennbar, und zwar dadurch, dass die von der ToF-Sensoreinheit emittierten Lichtpulse bis zu ihrer Detektion wesentlich länger brauchen als bei einem geschlossenen Deckel. Die ToF-Sensoreinheit kann insbesondere an ein maximales Füllvolumen des Behälters anpassbar sein, wobei dies beispielsweise mittels eines Kippschalters erfolgen kann. So ist jeder Kippschalterstellung eine Konfiguration der ToF-Sensoreinheit für das entsprechende maximale Füllvolumen eines Behälters zuordenbar. Da die ToF-Sensoreinheit für jeden Bildpunkt die Zeit misst, die das Licht bis zu einem Objekt und wieder zurück braucht, können entweder alle bildpunktbezogenen Abstände als Füllstandinformation weiterverarbeitet und übermittelt oder daraus ein Mittelwert gebildet werden, der den Füllstand definiert.

Sofern eine Ultraschall-Sensoreinheit vorgesehen sein soll, kann die Füllstandermittlungsvorrichtung beispielsweise an einer Behälterseitenwand anordenbar sein. Die Ultraschall-Sensoreinheit kann in diesem Fall von einem Gehäuse geschützt werden, damit sie nicht von Füllmaterial bei einem Befüllen oder einer Entnahme beschädigt werden kann. Gleiches gilt für eine Radar-Sensoreinheit.

Eine Druck-Sensoreinheit ermittelt die Füllhöhe indirekt, und zwar über das Gewicht des Füllmaterials. Durch das Eigengewicht des Füllmaterials und des dadurch entstehenden Drucks auf die Druck-Sensoreinheit kann mit dem Wissen um das spezifische Gewicht des Füllmaterials der Füllstand ermittelt werden. Diese Ermittlung kann beispielsweise von der Verarbeitungseinheit durchgeführt werden. Die Druck-Sensoreinheit ist vorzugsweise an einer Innenseite des Behälterbodens anordenbar, wobei sich in diesem Fall eine zentrale Anordnung als optimal erwiesen hat. Für den Fall, dass das Behältnis beispielsweise zwei Aussparungen für Hubwagen oder Gabelstapler aufweist, kann die Druck-Sensoreinheit zwischen diesen beiden Aussparungen angeordnet sein. Die Druck-Sensoreinheit kann beispielsweise Federn umfassen, die ab der Unterschreitung eines bestimmten Gewichts einen Kontakt auslösen und somit eine definierte Füllstandinformation an die Verarbeitungseinheit versenden. Sie kann das aufliegende Gewicht des Füllmaterials zusätzlich oder alternativ mithilfe von Dehnungsmessstreifen messen. Es ist auch denkbar eine Füllstandermittlungsvorrichtung mit einer Druck-Sensoreinheit außerhalb eines Behälters so anzuordnen, dass das Gesamtgewicht des Behälters ermittelt wird. Hierbei kann die Füllstandermittlungsvorrichtung beispielsweise stützenartig den Behälter unterbauen.

Für den Fall, dass eine Bewegung erfasst werden soll, kann beispielsweise eine Bewegungs-Sensoreinheit vorgesehen sein. Eine derartige Sensoreinheit kann eine Beschleunigungssensor-Einheit und/oder eine Vibrationssensor-Einheit umfassen und dient beispielsweise der Ermittlung eines bewegten Deckels eines Behältnisses und zeigt so die Benutzung des Behältnisses an. Diese Bewegungsinformationen sind ebenfalls über die Informationsermittlungseinheit an einen externen Empfänger übermittelbar. Sie können beispielsweise der Führung einer Statistik dienen, welche Aussagen ermöglicht zu einem Nutzerverhalten, insbesondere zur Öffnungshäufigkeit, Öffnungsdauer und zum Öffnungszeitpunkt des Behälters. Diese Informationen sind gleichsam mittels einer ToF-Sensoreinheit erfassbar.

Unabhängig von der Art der Sensoreinheit kann unter "Füllstandinformation" ein einziger Zahlenwert verstanden werden, der den Füllstand repräsentiert. Es ist daher von Vorteil, aufgrund einer möglicherweise ungleichförmigen Füllmaterialhöhe innerhalb des Behälters - beispielsweise wird Füllmaterial erfahrungsgemäß vornehmlich aus der Mitte des Behälters entnommen, so dass die Füllmaterialhöhe über dem Behälterboden in der Mitte des Behälters geringer ist als in den Randbereichen des Behälters - aus Messdaten einer Messung der Sensoreinheit einen geeigneten und repräsentativen Mittelwert zu bilden, der als Füllstandinformation dient. Hierzu können bekannte Mittelwertbildungsverfahren dienen, wobei die Mittelwertbildung von der Sensoreinheit und/oder der Verarbeitungseinheit vorgenommen werden kann.

Gemäß einer weiteren bevorzugten Ausführungsform der Füllstandermittlungsvorrichtung nach der Erfindung umfasst diese ein Energiespeichermittel, vorzugsweise einen Lithium-Eisenphosphat-Akkumulator, zur Energieversorgung der Füllstandermittlungsvorrichtung und/oder ein Energielademittel, vorzugsweise einen Micro-USB-Anschluss. Aufgrund starker Temperaturschwankungen durch einen Außeneinsatz der Füllstandermittlungsvorrichtung in kalten Wintermonaten sollte ein derartiger Akku verwendet werden, da er eine geringere Selbstentladung gegenüber Lithium-Ionen-Akkus aufweist. Zudem weist ein derartiger Akku eine hohe Zyklenfestigkeit auf und gilt aufgrund eines festen Elektrolyts als eigensicher. Zudem hat sich gezeigt, dass ein entsprechender Akku auch bei -30°C problemlos nutzbar ist. Der Energiespeicher ist vorzugsweise mittels eines Micro-USB-Anschlusses wieder aufladbar.

Es ist gemäß einer weiteren bevorzugten Ausführungsform der Füllstandermittlungsvorrichtung nach der Erfindung denkbar, dass sie vermittels Dichtungen und/oder konstruktiver Ausgestaltung derart ausgebildet ist, dass sie eine Schutzart von mindestens 51, vorzugsweise 66, weiter bevorzugt von 69 aufweist. Die entsprechenden Regelungen ergeben sich aus der DIN EN 60529 (VDE 0470-1): 2014-09. Es ist nämlich zu berücksichtigen, dass eine gewisse Feuchte in dem Behälter, insbesondere in einem Streugutbehälter vorherrschen kann. Bei Befüllung des Behälters mit Splitt oder Rollsplitt als Füllmaterial kann sich immer ein gewisses Maß an Restfeuchte in dem Splitt befinden. Auch Schnee oder Regen, der bei geöffnetem Deckel in den Behälter gelangen kann, wird für einen längeren Zeitraum im Behälter verbleiben und kann ggf. erst bei Tauwetter wieder entweichen. Sollte die Füllstandermittlungsvorrichtung im Inneren des Behälters an dessen Boden angeordnet sein, sollte nicht nur ein Spritzwasserschutz sondern auch ein Schutz gegen zeitweiliges oder sogar dauerndes Untertauchen vorliegen. Hier ist beispielsweise das Gehäuse entsprechend zu gestalten oder sämtliche verbaute Elektronik wasserdicht zu vergießen, um zudem Korrosion zu vermeiden.

Gemäß einer weiteren bevorzugten Ausführungsform der Füllstandermittlungsvorrichtung nach der Erfindung ist die Verarbeitungseinheit ausgebildet, um die von den Füllstandermittlungsmitteln empfangene Füllstandinformation mit einem auf einem Speicher gespeicherten Grenzwert zu vergleichen und bei Unterschreitung des Grenzwertes eine Übermittlung der Füllstandinformation mittels der Informationsübermittlungseinheit an den externen Empfänger zu veranlassen. Es ist nämlich denkbar, die Mitteilung an einen externen Empfänger erst dann zu veranlassen, wenn der Füllstand ein kritisches niedriges Maß erreicht. Alternativ hierzu ist auch denkbar, keinen Vergleich mit einem Grenzwert vorzunehmen und die Füllstandinformation nach jeder erfolgten Ermittlung durch das Füllstandermittlungsmittel an den externen Empfänger zu versenden. Aufseiten des externen Empfängers kann die Füllstandinformation beispielsweise in ein Ampelsystem eingetragen werden, wobei beispielsweise ein Füllstand in einem grünen Bereich einen vollen Behälter anzeigt und somit ein Auffüllen nicht nötigt ist. Eine in einem gelben Bereich angeordnete Füllstandinformation kann beispielsweise einen halbleeren Behälter anzeigen, wobei absehbar sein kann, dass dieser demnächst gefüllt werden müsste, sofern der Füllstand weiter abnimmt. Für den Fall, dass der Füllstand in einem roten Bereich einsortiert ist, ist eine Auffüllung des Behälters angezeigt. Dieses Ampelsystem ist jedoch lediglich exemplarisch und dient als Beispiel zur Verwendung der Füllstandinformation.

Es ist gemäß einer weiteren bevorzugten Ausführungsform der Füllstandermittlungsvorrichtung nach der Erfindung denkbar, dass die Informationsübermittlungseinheit ein Funkmodul zur Übermittlung der Füllstandinformation umfasst. Mittels dieses Funkmoduls ist zumindest die Füllstandinformation beispielsweise an ein öffentliches Datennetz und/oder ein proprietäres Datennetz zur Übermittlung an den externen Empfänger möglich. Die Füllstandermittlungsvorrichtung gemäß einer weiteren bevorzugten Ausführungsform der Erfindung kann beispielsweise ein Gehäuse umfassen, in welchem zumindest das Füllstandermittlungsmittel, die Verarbeitungseinheit, der Speicher und/oder die Informationsübermittlungseinheit entweder gemeinsam oder einzeln derart vermittels eines Dämpfungsmittels gelagert sind, dass Erschütterungen des Gehäuses gedämpft werden. Dadurch werden Erschütterungen des Gehäuses selbst nicht oder nur in deutlich gedämpfter Weise an elektrische Komponenten weitergegeben, was die Lebensdauer der Füllstandermittlungsvorrichtung erheblich verlängert.

Es wird zudem ein System vorgeschlagen, umfassend eine Füllstandermittlungsvorrichtung und einen Behälter, wobei die Füllstandermittlungsvorrichtung derart an oder in dem Behälter angeordnet ist, dass sie einen Füllstand eines Füllmaterials ermitteln kann, welches von dem Behälter aufgenommen werden kann.

Das erfindungsgemäße System weist im Wesentlichen die bezüglich der Vorrichtung oben genannten Vorteile auf, worauf hiermit verwiesen wird.

Gemäß einer bevorzugten Ausführungsform des Systems ist der Behälter ein Streugutbehälter. Dieser Behälter kann beispielsweise PE (Polyethylen), GFK (glasfaserverstärkten Kunststoff), PP (Polypropylen) oder ein anderes geeignetes Material umfassen oder aber teilweise oder ganz aus einem Metall bestehen. Hierbei ist zu beachten, dass der Behälter so ausgebildet oder die Informationsübermittlungseinheit so angeordnet ist, dass ein störungsfreies drahtloses Übermitteln der Füllstandinformation an den externen Empfänger möglich ist, sofern eine drahtlose Übermittlung stattfinden soll. Bei Nutzung eines Metallgehäuses kann beispielsweise die Informationsübermittlungseinheit außerhalb des Behälters angeordnet sein.

Gemäß einer weiteren bevorzugten Ausführungsform des Systems nach der Erfindung ist die Füllstandermittlungsvorrichtung an einem Deckel, vorzugsweise an einem den Behälter nach oben zumindest teilweise überdeckenden Deckel des Behälters und/oder an einer Behälterseitenwand und/oder an einem Behälterboden angeordnet. Es ist denkbar innerhalb oder an einem Behälter mehrere Füllstandermittlungsvorrichtungen anzuordnen. Der jeweilige Anordnungsort der Füllstandermittlungsvorrichtung hängt im Wesentlichen von dem genutzten Messverfahren bzw. der genutzten Sensorart ab, wie bereits oben erläutert.

Gemäß einer weiteren bevorzugten Ausführungsform des Systems nach der Erfindung umfasst dieses einen externen Empfänger, ausgebildet zur grafischen und/oder Listendarstellung von von der Informationsübermittlungseinheit empfangenen Informationen. Diese Informationen können beispielsweise, wie bereits erwähnt, in einem Ampelsystem darstellbar sein und/oder einen Füllstand bzw. die Füllstandinformation in Prozent bezogen auf ein maximales Füllvolumen anzeigen.

Des Weiteren wird ein Verfahren zur Ermittlung eines Füllstandes eines Füllmaterials in einem Behälter vorgeschlagen, umfassend die folgenden Schritte:
- Ermitteln des Füllstandes des Füllmaterials vermittels einer Füllstandermittlungsvorrichtung,
- Senden durch das Füllstandermittlungsmittel des Füllstandes als Füllstandinformation an eine Verarbeitungseinheit,
- Verarbeiten der Füllstandinformation durch die Verarbeitungseinheit,
- basierend auf dem Ergebnis der Verarbeitung, Senden durch die Verarbeitungseinheit zumindest des Füllstandes als Füllstandinformation an eine Informationsübermittlungseinheit, und
- Übermitteln durch die Informationsübermittlungseinheit zumindest des Füllstandes als Füllstandinformation an einen externen Empfänger.

Das erfindungsgemäße Verfahren weist im Wesentlichen die oben bezüglich der Füllstandermittlungsvorrichtung genannten Vorteile auf, worauf hiermit verwiesen wird.

Die Verarbeitung der Füllstandinformation kann derart erfolgen, dass die Verarbeitungseinheit die Füllstandinformation mit definierten Kriterien vergleicht, um eine Übermittlung zu veranlassen oder zu unterlassen.

Gemäß einer bevorzugten Ausführungsform des Verfahrens nach der Erfindung umfasst das Verarbeiten der Füllstandinformation ein Vergleichen mit einem Grenzwert und nur bei Unterschreitung des Grenzwertes ein Übermitteln der Füllstandinformation mittels der Informationsübermittlungseinheit an den externen Empfänger. Es erfolgt somit der Vergleich zwischen der Füllstandinformation und dem Grenzwert, wobei diese Ausführungsform eine Füllstandinformation erst dann übermittelt, wenn diese gemäß dem definierten Grenzwert als kritisch eingestuft wird.

Gemäß einer weiteren bevorzugten Ausführungsform des Verfahrens nach der Erfindung erfolgt das Ermitteln des Füllstandes regelmäßig in 48-Stunden Abständen, vorzugsweise in 24-Stunden Abständen, weiter bevorzugt in 12-Stunden Abständen, noch weiter bevorzugt in 6-Stunden Abständen. Je nach Aufstellort und Nutzerverhalten bzw. Entleerungsgeschwindigkeit können unterschiedliche Ermittlungsfrequenzen verwendet werden. Es ist beispielsweise sinnvoll, kurze Ermittlungsfrequenzen für diejenigen Behälter zu verwenden, welche oft benutzt werden und sich daher schnell leeren. Dadurch kann ein leerer Behälter schnell ermittelt werden und eine Auffüllung veranlasst werden. Gleichsam können große Ermittlungsfrequenzen für diejenigen Behälter gewählt werden, welche selten genutzt werden und sich somit tendenziell langsam leeren. Es ist somit auch möglich, statistisch verwendbare Daten zu schaffen.

Gemäß einer weiteren bevorzugten Ausführungsform des Verfahrens nach der Erfindung umfasst dieses die Ausgabe der Füllstandinformation durch den externen Empfänger, wobei die Informationen grafisch und/oder in Listenansicht dargestellt werden. Der externe Empfänger kann beispielsweise ein Computer einer zuständigen und/oder überwachenden Stelle sein.

Gemäß einer weiteren bevorzugten Ausführungsform des Verfahrens nach der Erfindung umfasst das Übermitteln zudem ein Übermitteln einer entsprechenden Behälterkennung. Dadurch ist einer zuständigen Stelle nicht nur eine Füllstandinformation eines Behälters bekannt, sondern auch eine Behälterkennung. Mit dem Wissen um den Aufstellort des Behälters ergibt sich nun ein klareres Bild über Füllstände von Behältern in Regionen oder Bezirken.

Gemäß einer weiteren bevorzugten Ausführungsform des Verfahrens nach der Erfindung kann ein Erstellen einer Befüllroute zum Befüllen spezifischer Behälter auf Basis zumindest der Füllstandinformation der Behälter vorgesehen sein. An der Befüllroute können dann zu befüllende Behälter liegen, die ihre Befüllnotwendigkeit durch einen als kritisch einzustufenden Füllstand nachgewiesen haben. Zur Erstellung der Befüllroute können bekannte Verfahren genutzt werden, wie beispielsweise der Dijkstra-Algorithmus, der das Problem der kürzesten Pfade löst. Durch die Nutzung einer derartigen Befüllroute können entsprechende Behälter kostengünstig und zeitoptimiert aufgefüllt werden.

Gemäß einer weiteren bevorzugten Ausführungsform des Verfahrens nach der Erfindung umfasst das Übermitteln ein Übermitteln der Informationen an ein öffentliches Datennetz und/oder an ein proprietäres Datennetz. Es ist beispielsweise ein proprietäres Datennetz mit geringem Datensatz und latenzunkritischen Daten denkbar. Gerade im Zuge der Internet-of-Things-Entwicklung eignet sich ein derartiges proprietäres Datennetz, da es eine gewisse Datensicherheit gewährleistet.

Zudem wird eine Verwendung der Füllstandermittlungsvorrichtung an oder in einem Behälter, vorzugsweise an oder in einem Streugutbehälter, vorgeschlagen.

Die erfindungsgemäße Verwendung weist im Wesentlichen die oben bezüglich der Vorrichtung beschriebenen Vorteile auf, worauf hiermit verwiesen wird.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

In den Rahmen der Erfindung fallen sämtliche Kombinationen aus zumindest zwei von in der Beschreibung, den Ansprüchen und/oder den Figuren offenbarten Merkmalen. Diese sollen auch als kombiniert beanspruchbar gelten.

Weitere Vorteile, Merkmale und Einzelheiten der Erfindung ergeben sich aus der nachfolgenden Beschreibung bevorzugter Ausführungsbeispiele sowie anhand der Zeichnungen.

Diese Zeichnungen zeigen in:
- Fig. 1: eine perspektivische Ansicht eines erfindungsgemäßen Systems; und
- Fig. 2: eine perspektivische Ansicht einer Füllstandermittlungsvorrichtung nach der Erfindung.

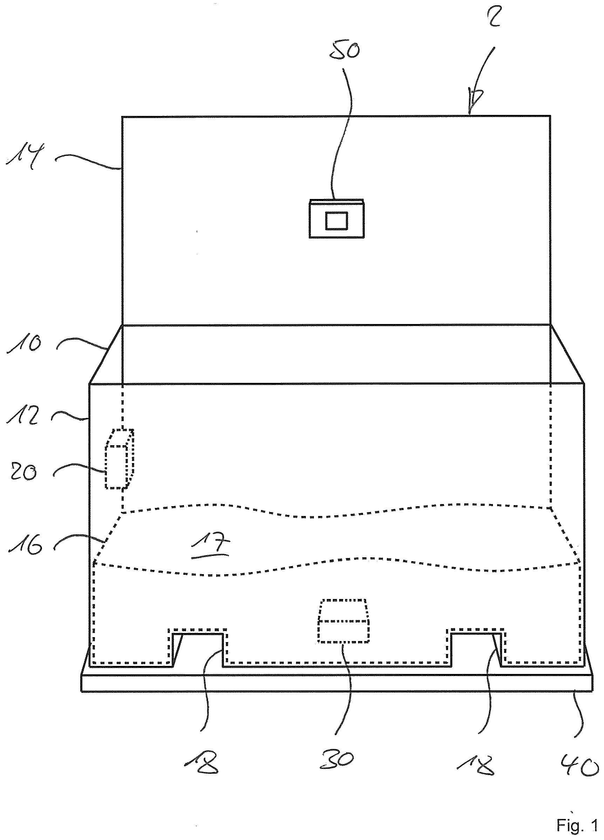

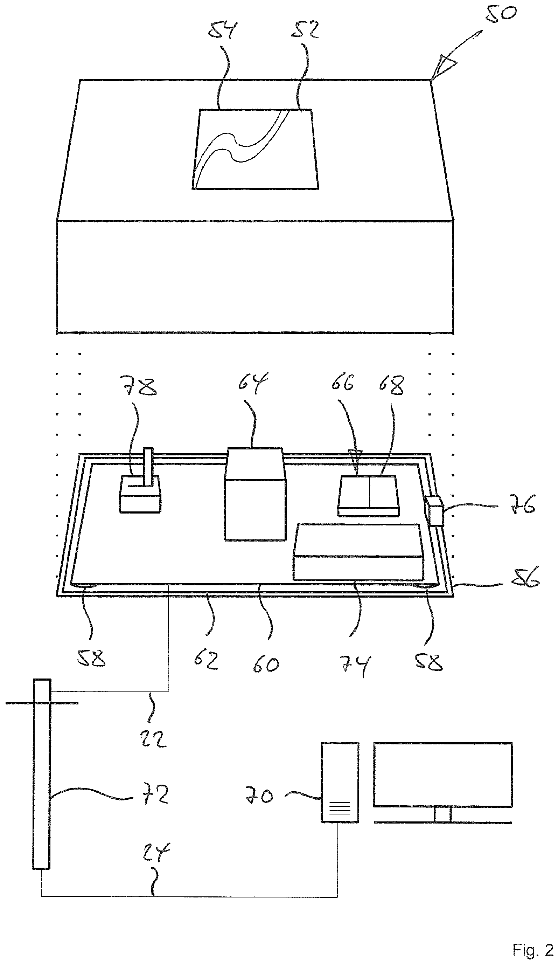

In Fig. 1 ist ein System 2 gezeigt, umfassend eine Füllstandermittlungsvorrichtung 50 und einen Behälter, welcher als Streugutbehälter 10 ausgebildet ist. Der Streugutbehälter 10 umfasst einen Korpus 12, welcher mit Splitt 16 als Füllmaterial gefüllt ist und einen an dem Korpus 12 schwenkbar angelenkten Deckel 14, an welchem die Füllstandermittlungsvorrichtung 50 angeordnet ist. Der Splitt 16 weist eine Oberfläche 17 auf, welche leicht wellig ist. Der Korpus 12 weist in seinem unteren Bereich zwei Ausnehmungen 18 auf, welche dem Eingreifen von Gabelstaplergabeln dienen. Der Deckel 14 ist in seiner aufgeklappten Stellung gezeigt, um die an seiner Innenseite angeordnete Füllstandermittlungsvorrichtung 50 abzubilden. Somit ist die Füllstandermittlungsvorrichtung 50 innerhalb des Streugutbehälters 10 angeordnet (bei üblicherweise geschlossenem Deckel). Die Füllstandermittlungsvorrichtung 50 umfasst als Füllstandermittlungsmittel eine Time-Of-Flight-Sensoreinheit 64 (ToF). Eine detaillierte Ansicht einer Füllstandermittlungsvorrichtung 50 ist in Fig. 2 gezeigt. Es ist denkbar, dass das Blickfeld der Time-Of-Flight-Sensoreinheit 64 die gesamte Oberfläche 17 erfassen kann.

Lediglich zur Veranschaulichung sind in Fig. 1 weitere Füllstandermittlungsvorrichtungen 20, 30 und 40 abgebildet. Die exemplarische Füllstandermittlungsvorrichtung 20 ist an einer Behälterseitenwand angeordnet und umfasst als Füllstandermittlungsmittel eine Ultraschall-Sensoreinheit. Eine weitere exemplarische Füllstandermittlungsvorrichtung 30 ist an dem Behälterboden mittig zwischen den beiden Ausnehmungen 18 angeordnet und umfasst als Füllstandermittlungsmittel eine Druck-Sensoreinheit. Eine weitere exemplarische Füllstandermittlungsvorrichtung 40 unterbaut den Korpus 12 rahmenartig, umfasst ebenfalls eine Druck-Sensoreinheit und misst das Gesamtgewicht des Streugutbehälters 10.

Fig. 2 zeigt die an dem Deckel 14 angeordnete Füllstandermittlungsvorrichtung 50 zur besseren Veranschaulichung in einer Demontagestellung.

Jede der Füllstandermittlungsvorrichtungen 20, 30, 40 und 50 kann in geeigneter Weise mit oder an dem Streugutbehälter 10 befestigt oder verbunden sein. Hierfür eignet sich insbesondere ein Verschrauben, Verklemmen, Verspritzen oder ein Magnetanhaften - sofern davon die Funktion der Sensoreinheit unbeeinträchtigt ist.

Die Füllstandermittlungsvorrichtung 50 umfasst eine Haube 52 mit einem zentral angeordneten transparenten Abschnitt 54, wobei die Haube 52 ausgehend von der Deckelinnenseite in den Innenraum des Streugutbehälters 10 ragt. Zudem umfasst die Füllstandermittlungsvorrichtung 50 eine Basis 56, welche in geeigneter Weise mit dem Deckel 10 verbunden ist. Die Haube 52 ist derart auf die Basis 56 aufsetz- und an dieser befestigbar, dass eine geeignete Schutzart erzielt ist. Vermittels gummiartiger Dämpfungsmittel 58 ist an der Basis 56 eine Platine 60 angeordnet, welche randseitig von einer Dichtung 62 umgeben ist. Die Dichtung 62 wirkt in montiertem Zustand mit der Haube 52 zur Realisierung der Schutzart zusammen. Von der Platine 60 getragen ist das als ToF-Sensoreinheit 64 ausgebildete Füllstandermittlungsmittel. Die ToF-Sensoreinheit 64 ist zentral auf der Platine 60 angeordnet und so zu dem transparenten Abschnitt 54 ausgerichtet, dass sie ein freies Sichtfeld in Richtung der Oberfläche 17 hat. Auf der Platine 60 ist ebenfalls eine Verarbeitungseinheit 66 angeordnet, welche zum Verarbeiten zumindest der Füllstandinformation dient. Die Verarbeitungseinheit 66 umfasst einen Speicher 68, auf welchem beispielsweise ein oder mehrere Grenzwerte und/oder eine Behälterkennung ablegbar ist/sind. Auf der nicht dargestellten Rückseite der Platine 60 ist eine Informationsübermittlungseinheit angeordnet, umfassend ein Funkmodul zur kabellosen Übertragung zumindest der Füllstandinformation an einen externen Empfänger 70. Diese Informationsübermittlung ist beispielhaft mittels Informationspfad 22 dargestellt und kann an eine geeignete als Empfangs- und Sendemast dargestellte Infrastruktur 72 eines proprietären Datennetzes erfolgen. Zudem kann die Füllstandinformation über das proprietäre Datennetz an den externen Empfänger 70 übertragen werden. Dies kann ebenfalls kabellos oder kabelgebunden erfolgen. Diese Informationsübermittlung ist beispielhaft mittels Informationspfad 24 dargestellt. Auf der Platine 60 ist zudem ein als Lithium-Eisenphosphat-Akkumulator 74 ausgebildetes Energiespeichermittel angeordnet. Dieser Akkumulator 74 dient zur Energieversorgung der Füllstandermittlungsvorrichtung 50 und ist vermittels eines als Micro-USB-Anschlusses 76 ausgebildeten Energielademittels wieder aufladbar. Ebenfalls auf der Platine 60 ist ein Kippschalter 78 angeordnet, um die ToF-Sensoreinheit 64 an verschiedene maximale Füllvolumina von Streugutbehältern 10 anzupassen. Dadurch kann eine einzige Füllstandermittlungsvorrichtung für unterschiedliche Behälter genutzt werden.

Die von dem externen Empfänger 70 empfangenen Informationen können grafisch und/oder in Listenansicht dargestellt werden. Mithilfe der Füllstandinformationen und Behälterkennung kann der externe Empfänger zum Erstellen einer Befüllroute ausgebildet sein. Der externe Empfänger 70 ist als Computer mit einem Bildschirm dargestellt.

### Bezugszeichen

- 2: System
- 10: Streugutbehälter
- 12: Korpus
- 14: Deckel
- 16: Splitt
- 17: Oberfläche
- 18: Ausnehmung
- 20: Füllstandermittlungsvorrichtung
- 22: Informationspfad
- 24: Informationspfad
- 30: Füllstandermittlungsvorrichtung
- 40: Füllstandermittlungsvorrichtung
- 50: Füllstandermittlungsvorrichtung
- 52: Haube
- 54: transparenter Abschnitt
- 56: Basis
- 58: Dämpfungsmittel
- 60: Platine
- 62: Dichtung
- 64: ToF-Sensoreinheit (Time-Of-Flight-Sensoreinheit)
- 66: Verarbeitungseinheit
- 68: Speicher
- 70: externer Empfänger
- 72: Infrastruktur eines proprietären Datennetzes
- 74: Lithium-Eisenphosphat-Akkumulator
- 76: Mico-USB-Anschluss
- 78: Kippschalter

## Patentansprüche

1. Füllstandermittlungsvorrichtung (20, 30, 40, 50), umfassend ein Füllstandermittlungsmittel, ausgebildet zur Ermittlung eines Füllstandes eines Füllmaterials in einem Behälter und zum Senden einer Füllstandinformation, eine Verarbeitungseinheit (66), ausgebildet zur Verarbeitung zumindest der Füllstandinformation, sowie eine Informationsübermittlungseinheit, ausgebildet zur drahtlosen wahlweisen Übermittlung zumindest der Füllstandinformation an einen externen Empfänger (70).

2. Füllstandermittlungsvorrichtung nach Anspruch 1, wobei das Füllstandermittlungsmittel eine Time-Of-Flight-Sensoreinheit (64), eine Ultraschall-Sensoreinheit, eine Radar-Sensoreinheit, eine Druck-Sensoreinheit und/oder eine Bewegungs-Sensoreinheit, insbesondere eine Beschleunigungssensor-Einheit und/oder eine Vibrationssensor-Einheit, umfasst.

3. Füllstandermittlungsvorrichtung nach einem der vorangehenden Ansprüche, umfassend
ein Energiespeichermittel, vorzugsweise einen Lithium-Eisenphosphat-Akkumulator (74), zur Energieversorgung der Füllstandermittlungsvorrichtung und/oder ein Energielademittel, vorzugsweise einen Mikro-USB-Anschluss (76).

4. Füllstandermittlungsvorrichtung nach einem der vorangehenden Ansprüche, wobei
sie vermittels Dichtungen (62) und/oder konstruktiver Ausgestaltung derart ausgebildet ist, dass sie eine Schutzart von mindestens 51, vorzugsweise von 66, weiter bevorzugt von 69 aufweist.

5. Füllstandermittlungsvorrichtung nach einem der vorangehenden Ansprüche, wobei
die Verarbeitungseinheit (66) ausgebildet ist, um die von dem Füllstandermittlungsmittel empfangene Füllstandinformation mit einem auf einem Speicher (68) gespeicherten Grenzwert zu vergleichen und bei Unterschreitung des Grenzwertes eine Übermittlung der Füllstandinformation mittels der Informationsübermittlungseinheit an den externen Empfänger (70) zu veranlassen.

6. Füllstandermittlungsvorrichtung nach einem der vorangehenden Ansprüche, wobei
die Informationsübermittlungseinheit ein Funkmodul zur Übermittlung der Füllstandinformation umfasst.

7. Füllstandermittlungsvorrichtung nach einem der vorangehenden Ansprüche, umfassend
ein Gehäuse, in welchem zumindest das Füllstandermittlungsmittel, die Verarbeitungseinheit (66), der Speicher (68) und/oder die Informationsübermittlungseinheit entweder gemeinsam oder einzeln derart vermittels eines Dämpfungsmittels (58) gelagert sind, dass Erschütterungen des Gehäuses gedämpft werden.

8. System (2), umfassend
eine Füllstandermittlungsvorrichtung (20, 30, 40, 50) nach einem der vorangehenden Ansprüche und
einen Behälter, wobei die Füllstandermittlungsvorrichtung (20, 30, 40, 50) derart an oder in dem Behälter angeordnet ist, dass sie einen Füllstand eines Füllmaterials ermitteln kann, welches von dem Behälter aufgenommen werden kann.

9. System (2) nach Anspruch 8, wobei
der Behälter ein Streugutbehälter (10) ist.

10. System nach Anspruch 8 oder 9, wobei
die Füllstandermittlungsvorrichtung (20, 30, 40, 50) an einem Deckel (14), vorzugsweise an einem den Behälter nach oben zumindest teilweise überdeckenden Deckel (14) des Behälters und/oder an einer Behälterseitenwand und/oder an einem Behälterboden angeordnet ist.

11. System (2) nach einem der vorangehenden Ansprüche, umfassend einen externen Empfänger (70), ausgebildet zur grafischen und/oder Listendarstellung von von der Informationsübermittlungseinheit empfangenen Informationen.

12. Verfahren zur Ermittlung eines Füllstandes eines Füllmaterials in einem Behälter, umfassend die folgenden Schritte
- Ermitteln des Füllstandes des Füllmaterials vermittels einer Füllstandermittlungsvorrichtung (20, 30, 40, 50),
- Senden durch das Füllstandermittlungsmittel des Füllstandes als Füllstandinformation an eine Verarbeitungseinheit (66),
- Verarbeiten der Füllstandinformation durch die Verarbeitungseinheit (66),
- basierend auf dem Ergebnis der Verarbeitung, Senden durch die Verarbeitungseinheit (66) zumindest des Füllstandes als Füllstandinformation an eine Informationsübermittlungseinheit, und
- Übermitteln durch die Informationsübermittlungseinheit zumindest des Füllstandes als Füllstandinformation an einen externen Empfänger (70).

13. Verfahren nach Anspruch 12, wobei
das Verarbeiten der Füllstandinformation ein Vergleichen mit einem Grenzwert und nur bei Unterschreitung des Grenzwertes ein Übermitteln der Füllstandinformation mittels der Informationsübermittlungseinheit an den externen Empfänger (70) umfasst.

14. Verfahren nach einem der vorangehenden Ansprüche, wobei das Ermitteln des Füllstandes regelmäßig in 48-Stunden Abständen, vorzugsweise in 24-Stunden Abständen, weiter bevorzugt in 12-Stunden Abständen, noch weiter bevorzugt in 6-Stunden Abständen erfolgt.

15. Verfahren nach einem der vorangehenden Ansprüche, weiterhin umfassend
- Ausgabe der Füllstandinformation durch den externen Empfänger (70), wobei die Informationen grafischen und/oder in Listenansicht dargestellt werden.

16. Verfahren nach einem der vorangehenden Ansprüche, wobei das Übermitteln zudem ein Übermittel einer entsprechenden Behälterkennung umfasst.

17. Verfahren nach einem der vorangehenden Ansprüche, weiterhin umfassend
- Erstellen einer Befüllroute zum Befüllen spezifischer Behälter auf Basis zumindest der Füllstandinformationen der Behälter.

18. Verfahren nach einem der vorangehenden Ansprüche, wobei das Übermitteln ein Übermittel an ein öffentliches Datennetz und/oder an ein proprietäres Datennetz umfasst.

19. Verwendung
der Füllstandermittlungsvorrichtung (20, 30, 40, 50) nach einem der Ansprüche 1 bis 7 an oder in einem Behälter, vorzugsweise an oder in einem Streugutbehälter (10).
